# DEMANDE DE BREVET EUROPEEN

(11) **EP 0 565 389 A1**
(43) Date de publication de la demande: **13.10.1993**
(21) Numéro de dépôt: 93400464.9
(22) Date de dépôt: 23.02.1993
(51) Int. Cl.: G06K 19/073

(54) **Procédé de personnalisation d'une carte à puce**

(30) Priorité: 24.02.1992 FR 9202089
(71) Demandeur: GEMPLUS CARD INTERNATIONAL, F-13420 Gemenos (FR)
(72) Inventeur: Martineau, Philippe, F-75116 Paris (FR)
(74) Mandataire: Schmit, Christian Norbert Marie

(57) **Abrégé**

On conçoit un nouveau fichier, appelé fichier dynamique (6) en stockant dans deux registres pointeurs (12,13) les adresses dans la mémoire de début et de fin de ce fichier dynamique (6). Ce fichier dynamique (6) est constitué de la zone vierge de la mémoire (4), se situant entre la zone de données (5) et la table d'allocation (7). Lors de la phase de personnalisation de la carte (1), on exécute d'abord une instruction de sélection du fichier dynamique (6). Le microprocesseur (10) lit alors le contenu des registres pointeurs (12,13) et pointe à ces adresses. Puis, on effectue, sur le fichier dynamique sélectionné, toute l'opération de personnalisation en exécutant tout simplement les instructions d'utilisation.

## Description

La présente invention a pour objet un procédé de personnalisation d'une carte à puce munie d'un microprocesseur. Elle a pour objet d'optimiser cette phase.

Elle trouve son application dans le domaine des cartes à puce, ou plus généralement dans le domaine où des circuits intégrés électroniques, portés par des supports portables, sont utilisés pour permettre à des opérateurs d'entrer en relation avec un système informatique. Carte à puce est donc synonyme de support portable.

De telles cartes sont utilisées dans plusieurs domaines (les télécommunications, la banque). Elles peuvent notamment permettre à leur porteur d'accéder à leur compte bancaire, d'effectuer des virements. Elles peuvent aussi stocker des numéros de téléphone, ou encore être préchargées avec des unités téléphoniques.

Pour permettre de telles utilisations, il faut distinguer, dans la vie d'une carte, trois étapes. A l'origine, une puce électronique est créée chez un fabricant qui conçoit sa structure en mettant en place des mémoires électroniques, un microprocesseur, des bus de données et d'adresses. Le fabricant conçoit aussi le système d'exploitation qui doit être capable de gérer le fonctionnement de la puce. Puis la puce est placée dans un support, la carte. Cette carte est livrée à un émetteur, par exemple une agence de télécommunications ou une banque. On considère que la puce est livrée nue car elle ne comporte que les instructions du système d'exploitation du microprocesseur. Ces instructions sont stockées dans une mémoire non volatile de la carte (de type ROM). Certaines de ces instructions sont utiles lors de l'utilisation de la carte: elles constituent un jeu d'instructions d'utilisation. Les autres ne sont utiles que lors de la programmation de la puce en vue d'une telle utilisation: elles constituent un jeu d'instructions de personnalisation.

Cette programmation est réalisée, en général, par l'émetteur. En effet, en fonction de l'utilisation que l'émetteur envisage de faire de la carte, il enregistre, dans une autre mémoire de la puce, des fichiers programmés correspondants. Cette étape de la vie de la carte est appelée, par habitude, personnalisation de la carte. Elle permet de structurer le contenu de cette mémoire de la puce en vue de l'utilisation finale. Elle consiste en des opérations exécutées par des instructions du microprocesseur. Ces opérations sont effectuées par l'émetteur avant qu'un utilisateur ne soit en possession de la carte. Essentiellement, ce sont des opérations de création de fichiers dans cette mémoire et de verrouillage de données secrètes. On peut, aussi, imaginer que des opérations de personnalisation soient exécutées par l'émetteur après que l'utilisateur ait pris possession de la carte. C'est le cas, par exemple, lorsque l'utilisateur sollicite l'émetteur en vue de bénéficier d'un nouveau service, .améliorer un service déjà existant ou arrêter un service. L'émetteur effectue alors des opérations de création, ,d'extension ou d'effacement de fichier correspondantes. Par la suite, l'utilisateur de la carte, en fonction du service dont il a besoin, fait exécuter des instructions du microprocesseur nécessaires (par exemple, lecture, mise à jour).

Dans l'état de la technique, on connaît un procédé de personnalisation de carte à puce. On va le décrire ci-après et on montrera que ce procédé rencontre certaines limitations. Avec le procédé de l'invention, on montrera comment dépasser ces limitations.

Actuellement, une puce comporte un microprocesseur et au moins deux mémoires. La première des mémoires, non volatile, programmable et effaçable (en général de type EEPROM), stocke les fichiers. Elle est divisée physiquement en deux parties essentielles. Une première partie, appelée zone de données, stocke les fichiers. Une deuxième partie, appelée table d'allocation, contient des descripteurs. Un descripteur est un enregistrement représentatif d'un fichier. Il comporte un certain nombre d'octets en langage binaire. Un premier octet permet, par exemple, de désigner dans la mémoire le fichier concerné par ce descripteur. Les cinq octets suivants concernent, par exemple, la protection à garantir au fichier concerné. Il peut exister, en effet, une protection en lecture, en écriture, en effacement, en mise à jour et en verrouillage de fichier. Le descripteur comporte enfin, en dernière partie, par exemple, deux octets permettant de connaître la taille du fichier stocké dans la zone de données ainsi que son adresse de début. Quant à la deuxième mémoire, non volatile, non programmable par le microprocesseur (en général de type ROM), elle stocke les instructions du microprocesseur qui sont gérées par un système d'exploitation.

Les instructions de personnalisation sont uniquement exécutées par l'émetteur. Par exemple, pour créer un nouveau fichier, l'émetteur exécute une instruction de création de fichier appartenant au jeu d'instruction de personnalisation. Il procède de la même façon pour étendre, effacer ou verrouiller un fichier en exécutant l'instruction de personnalisation correspondante (extension, effacement, verrouillage). Concernant les instructions d'utilisation, elles sont exécutées par l'utilisateur. Elles permettent notamment de sélectionner un fichier, de le lire ou de le modifier. Elles ne permettent pas d'exécuter les opérations de personnalisation.

Cette dualité des jeux d'instructions soulève un problème car le système d'exploitation doit être capable de gérer ces deux jeux d'instructions. Ceci complique nécessairement sa structure et pose un problème de coordination.

Cette dualité présente un autre inconvénient. Elle restreint sérieusement le nombre de services d'utilisation que le système d'exploitation peut fournir. En effet, comme on ne peut, pour des raisons de technologie, augmenter la taille de la première ou de la deuxième mémoire, la partie de la deuxième mémoire occupée par les instructions de personnalisation représente autant de place en mémoire qui ne peut être utilisée par les instructions d'utilisation. On comprend alors qu'il serait intéressant de réduire et de simplifier le jeu d'instructions de personnalisation. Ceci permettrait de stocker plus d'instructions d'utilisation et, par un jeu d'instructions d'utilisation plus conséquent, de fournir plus de services à l'utilisation finale.

Un tel procédé de personnalisation soulève d'autres problèmes. Un premier problème concerne l'accès laissé à l'utilisateur d'un jeu d'instructions très puissant et dont il peut,se servir éventuellement pour falsifier la puce de la carte. Un autre problème concerne la perte de temps chez l'émetteur pour accomplir cette opération de personnalisation. En effet, lors de la personnalisation, il n'est pas rare d'avoir à créer plusieurs fichiers. Or, un tel procédé impose à l'émetteur d'exécuter l'instruction de création pour chaque fichier. Ainsi, en considérant que l'exécution d'une instruction de personnalisation dure environ 100 ms, qu'il y a en moyenne dix fichiers à créer, on obtient une durée de l'ordre d'une seconde. Ce qui n'est pas négligeable pour une opération globale de personnalisation de carte qui dure environ 10 secondes. Cette durée est d'autant moins négligeable qu'elle se répercute de nombreuses fois car la personnalisation des cartes se réalise à la chaîne.

Pour résoudre ces problèmes, dans la présente invention, on a eu l'idée de concevoir un nouveau fichier, appelé fichier dynamique. Dans ce but, on stocke, dans deux registres pointeurs, les adresses dans la mémoire de début et de fin de ce fichier dynamique. Ce fichier dynamique est constitué de la zone vierge de la mémoire, se situant entre la première partie, la zone de données, et la deuxième partie, la table d'allocation. Lors de la phase de personnalisation de la carte, on exécute d'abord une instruction de sélection du fichier dynamique. Le microprocesseur lit alors le contenu des registres pointeurs et pointe à ces adresses. Puis, on effectue, sur le fichier dynamique sélectionné, toute l'opération de personnalisation en exécutant tout simplement les instructions d'utilisation.

Ainsi, afin de créer un nouveau fichier, on sélectionne le fichier dynamique. On y écrit, en une seule fois, des données et un descripteur correspondant au nouveau fichier, respectivement, dans la partie du fichier dynamique contiguë à la zone de données et dans celle contiguë à la table d'allocation. Cette instruction de sélection du fichier dynamique est aussi exécutée lors de l'extension de fichier, de l'effacement et du verrouillage. Toutes les instructions de personnalisation de la puce, que l'on trouve dans l'état de la technique, se trouvent alors remplacées, dans l'invention, par la seule instruction de sélection du fichier dynamique.

Ainsi, l'invention a pour objet un procédé de personnalisation de la mémoire d'une puce d'une carte à puce, cette puce étant munie d'un microprocesseur et de cette mémoire, dans lequel
- on organise la mémoire pour qu'elle présente une zone de données, une zone contenant une table d'allocation et, située entre ces deux zones, une zone vierge de mémoire inutilisée,
- on munit le microprocesseur d'un jeu d'instructions d'utilisation utilisables par un utilisateur, caractérisé en ce que
- on munit de plus le microprocesseur d'une instruction spécifique dite de sélection de cette zone vierge, appelée fichier dynamique,
- on repère les adresses du début et de la fin de la zone vierge,
- on range ces adresses de début et de fin dans des registres pointeurs,
- on sélectionne cette zone vierge, cette opération de sélection consistant à limiter toutes opérations, notamment d'utilisation et de personnalisation de la mémoire de la puce, aux cellules mémoires de la mémoire dont les adresses sont comprises entre les adresses rangées,
- on effectue sur ce fichier dynamique des opérations de personnalisation en exécutant des instructions d'utilisation.

L'invention sera mieux comprise à la lecture de la description qui suit et à l'examen des figures qui l'accompagnent. Celles-ci ne sont données qu'à titre indicatif et nullement limitatif de l'invention. Les figures montrent
- figure 1 : la représentation schématique d'une puce selon l'invention;
- figure 2 : un organigramme de création de fichier selon l'invention;
- figure 3 : un organigramme d'effacement de fichier selon l'invention.

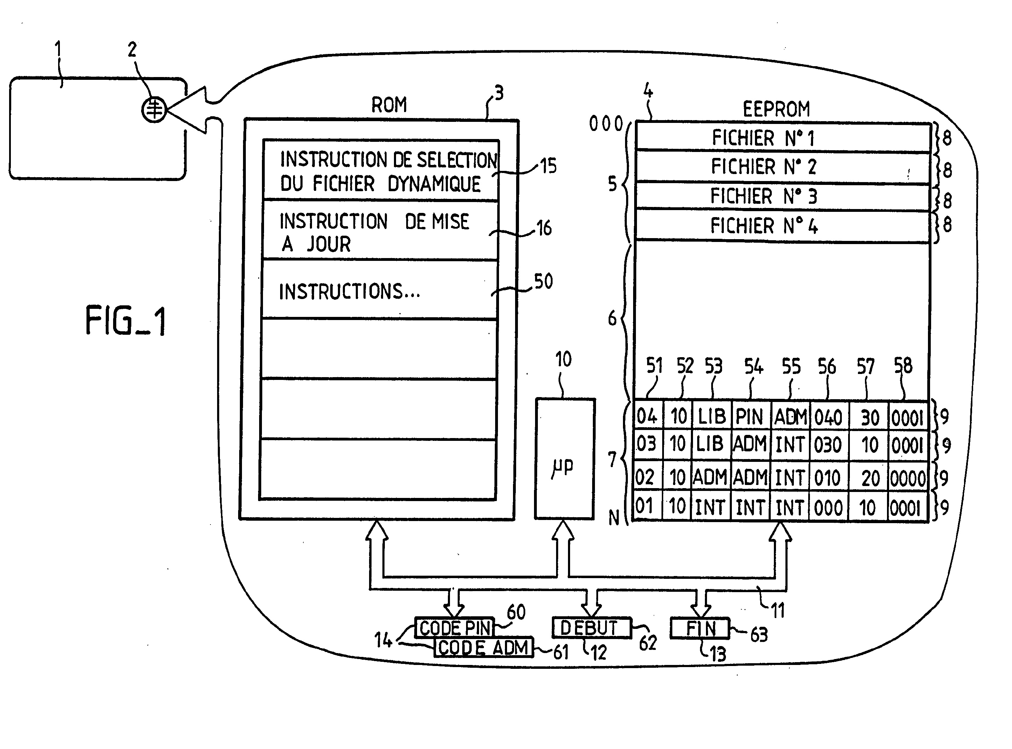

La figure 1 représente une organisation schématique d'une puce 2 d'une carte 1 à puce selon l'invention. Cette puce 2 comporte, sur un support, un circuit électronique muni de moyens d'échange avec le monde extérieur, non représentés mais de type connu (métallisations de contacts). La puce 2 comporte un microprocesseur 10 et une mémoire 4 de données (dans un exemple, cette mémoire 4 de données est de type EEPROM, c'est à dire qu'elle est programmable et effaçable). Il comporte aussi une mémoire programme 3 (ROM) qui contient des instructions 15, 16 et 50 du microprocesseur 10. Ces instructions sont gérées par un système d'exploitation. Le microprocesseur 10 est relié aux mémoires 3 et 4 par un bus 11 de données et d'adresses. Une architecture type d'un microprocesseur est par ailleurs décrite dans le livre: "Comprendre les microprocesseurs" de Daniel Queyssac, Editions Radio, France 1983.

Comme le montre cette figure, la mémoire 4 de données comporte trois parties 5, 6 et 7. Une première partie, appelée zone de données 5, stocke des fichiers 8. Une deuxième partie, appelée table d'allocation 7, contient des descripteurs 9. Chaque descripteur 9 est représentatif d'un fichier 8. Il contient un certain nombre d'octets en langage binaire. Les deux premiers octets 51 et 52 permettent de désigner le nom du fichier ainsi que le nom d'un répertoire dans lequel le f ichierse trouve. Les trois octets suivants 53, 54 et 55 concernent des conditions d'accès en lecture de fichier, en mise à jour et en effacement. Chacune de ces conditions d'accès peut contenir les informations suivantes: LIB, INT, PIN, ADM signifiant respectivement: libre, interdit, conditionné à un code PIN 60 connu par l'utilisateur (PIN signifiant personnal identification number), conditionné à un code 61 administratif c'est à dire connu par l'émetteur. Ces codes sont stockés dans des registres 14 de vérification. On les compare, pour permettre l'accès au fichier 8, avec le code que l'utilisateur ou l'émetteur rentre. Le descripteur 9 comporte aussi deux octets 56 et 57 permettant de connaître l'emplacement du fichier 8 stocké dans la zone mémoire 5 ainsi que la taille du fichier. Il comporte enfin, en dernière partie, un octet 58 permettant de vérifier la cohérence du descripteur 9. Dans un exemple, on peut utiliser cet octet 58 de sorte que le nombre de bits correspondant à l'adresse de début, la taille et l'octet de vérification soit pair.

Dans l'exemple représenté sur la figure 1, on a créé quatre fichiers 8. Le premier fichier (n° 1) est un exemple de fichier contenant des données secrètes. Le deuxième fichier (n° 2) est un exemple de fichier administratif où peuvent être stockées des données non accessibles à l'utilisateur. Ce fichier ne peut être lu et modifié que sous contrôle du code 61 administratif. Le troisième fichier (n° 3) est un fichier utilisateur qui est libre en lecture mais qui ne peut être modifié que sous contrôle du code 61 administratif. Quant au quatrième fichier (n° 4), c'est le cas typique du fichier utilisateur. Il est libre en lecture et accessible en mise à jour sous contrôle du code PIN 60.

Quant à la troisième partie, elle se situe entre ces deux parties et correspond à une zone vierge 6 de mémoire inutilisée.

L'idée de l'invention est de donner un caractère dynamique à cette zone 6 de mémoire inutilisée. On permet à un émetteur de la carte de pointer cette zone et de se déplacer dans cette zone comme dans un fichier de la zone 5 de données grâce à des instructions 16 et 50 d'utilisation (lecture, écriture, modification). De plus, on ne permet l'accès à cette zone qu'en vue d'effectuer une opération de personnalisation. Cette opération pouvant être une création de fichier, une extension de fichier, un effacement de fichier ou un verrouillage de données secrètes. Cette zone 6 vierge, appelée, par la suite, fichier dynamique, prend alors la forme d'un fichier que l'on sélectionne.

Or, la sélection de ce fichier dynamique 6 est différente de celle d'un fichier 8 de la zone 5 de données pour plusieurs raisons. D'une part, le microprocesseur 10 procède différemment lors de la sélection du fichier dynamique 6 que lors de celle d'un fichier 8 de le zone 5 de données. D'autre part, la sélection du fichier dynamique 6 se réalise dans le seul but d'effectuer une opération de personnalisation alors que celle d'un fichier 8 de la zone 5 de données se réalise lors de l'utilisation finale de la carte 1. Ce qui implique que seul l'émetteur de la carte peut sélectionner ce fichier dynamique 6.

Cette sélection se réalise donc en exécutant non pas une instruction de sélection de fichier de la zone de données mais une instruction particulière, appelée instruction 15 de sélection du fichier dynamique. Cette instruction 15 est stockée dans la mémoire 3. Ainsi, elle remplace les quatre instructions de personnalisation (correspondant aux quatre opérations de création, d'extension, d'effacement, et de verrouillage) que l'on trouve dans l'état de la technique.

De plus, cette instruction 15 est accessible seulement par l'émetteur car elle ne peut être exécutée que lors de la personnalisation de la carte 1. Ainsi, pour éviter qu'un utilisateur personnalise la carte 1, on prévoit de ne permettre l'accès à cette instruction que sur présentation du code 61 administratif connu que par l'émetteur. Lors de l'exécution de l'instruction 15, l'émetteur rentre un code. Celui-ci est alors comparé avec le code 61 contenu dans le registre 14 de vérification. En cas d'échec de la vérification, on aboutit sur un programme de rejet. Dans le cas contraire, on a accès au fichier dynamique 6.

L'accès au fichier dynamique 6 peut se faire de deux façons. Dans un premier exemple, on utilise deux registres pointeurs 12 et 13 où l'on stocke les adresses de début 62 et de fin 63 du fichier dynamique 6. Mais, comme la zone vierge 6 se rétrécit au fur et à mesure que l'on personnalise la carte 1, ces adresses 62 et 63 sont modifiées à chaque opération de personnalisation. Pour calculer ces adresses de début et de fin, le microprocesseur 10 pointe, à chaque sélection du fichier dynamique 6, le dernier descripteur 9 créé (descripteur du fichier n°4 d'après la figure 1). Ce descripteur 9 contient l'adresse 56 de début du dernier fichier créé (n°4) ainsi que la taille 57 de ce fichier. Ces informations sont lues par le microprocesseur 10. Le microprocesseur 10 en déduit alors l'adresse 62 de début du fichier dynamique 6. Elle est égale à l'adresse 56 de début du dernier fichier créé plus la taille 57 de ce fichier. Ce calcul se justifie, d'une part, car le dernier fichier (n°4) créé se trouve à la frontière avec le début du fichier dynamique 6. Il se justifie, d'autre part, car on a enregistré les fichiers à partir de l'adresse 0 et les descripteurs à partir de l'adresse N (en supposant qu'il y ait N cellules mémoires). Le calcul aurait été sensiblement le même si on avait interverti les adresses 0 et N. Quant à l'adresse 63 de fin du fichier dynamique 6, elle est égale à l'adresse du dernier descripteur 9 créé moins un. En effet, ce descripteur 9 se trouve dans la table d'allocation 7 au niveau de la frontière avec le fichier dynamique 6.

Dans un autre exemple, on utilise aussi deux registres pointeurs 12 et 13 où l'on stocke les adresses 62 et 63 de début et de fin du fichier dynamique 6. On procède ici de la façon suivante. Au début de la vie de la carte 1, c'est à dire quand la carte 1 ne comporte aucun fichier 8, le fabricant de la carte enregistre, dans ces deux registres pointeurs 12 et 13, l'adresse de début de mémoire (soit l'adresse 0) et l'adresse de fin de mémoire (soit l'adresse N si la mémoire comporte N cellules). Elles représentent, respectivement, l'adresse 62 et 63 de début et de fin du fichier dynamique 6. Mais, comme la zone vierge 6 se rétrécit au fur et à mesure que l'on personnalise la carte 1, on modifie alors le contenu des registres pointeurs 12 et 13 à chaque opération de personnalisation. Cette modification s'effectue en stockant, une fois l'opération de personnalisation terminée, dans les registres pointeurs 12 et 13, les nouvelles adresses 62 et 63 de début et de fin du fichier dynamique 6. Ces adresses sont lues lors de la prochaine opération sur le fichier dynamique 6. Ainsi, dans cet exemple, le contenu des registres pointeurs 12 et 13 est stocké à la fin d'une opération de personnalisation. Il est conservé jusqu'à la prochaine opération. Et, il est lu lors de la prochaine opération.

Ces deux méthodes pour pointer le fichier dynamique sont évidemment équivalentes. Dans la suite du présent document, on décrit l'invention en utilisant la seconde méthode. La description aurait été sensiblement la même si on avait choisi l'autre méthode.

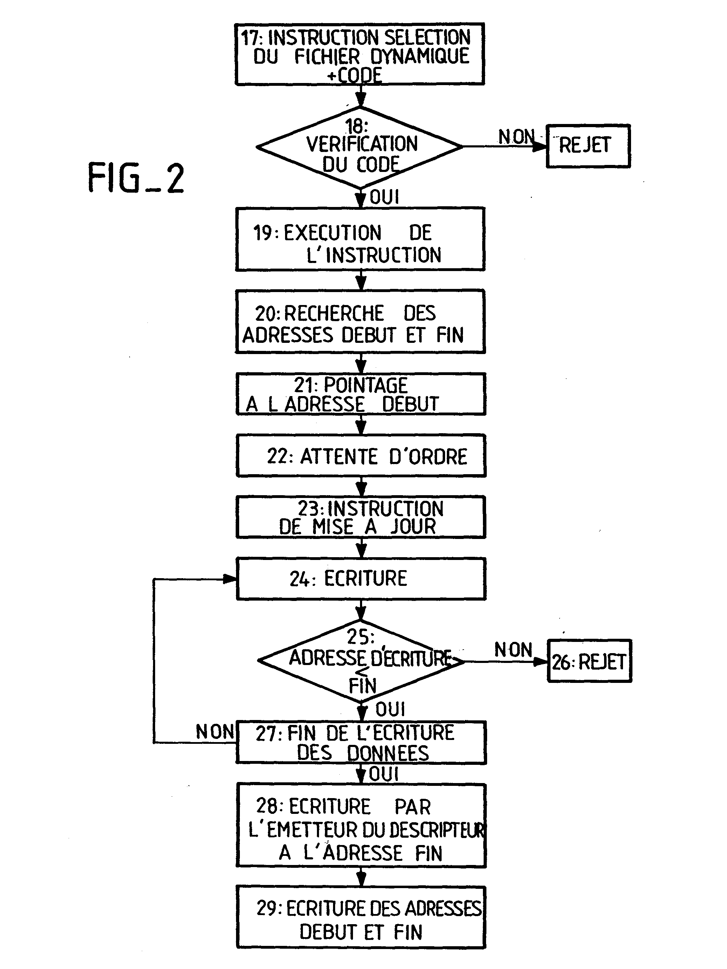

Parmi les opérations de personnalisation, commençons par décrire celle de création de fichier (figure 2). Pour créer un fichier, l'émetteur envoie 17 un ordre de sélection du fichier dynamique 6 et un code secret. Ce code est comparé au code administratif 61 contenu dans le registre 14 de vérification. En cas de succès de la vérification 18 du test, l'instruction 15 de sélection du fichier dynamique 6 est exécutée 19. Ce test permet d'éviterqu'un utilisateur personnalise la carte 1. Le microprocesseur 10 lit 20 alors, dans les registres pointeurs 12 et 13, les valeurs des adresses 62 et 63 de début et de fin du fichier dynamique 6. Il pointe 21 à l'adresse 62 de début et donne 22 la main à l'émetteur. Celui-ci lance 23 l'instruction 16 de mise à jour. Cette instruction 16 faisant partie du jeu d'instruction d'utilisation. Ensuite, il écrit 24, à cet endroit, c'est à dire au début du fichier dynamique 6, les données du fichier 8 qu'il crée. L'émetteur peut écrire des données tant qu'il reste de la place dans la zone vierge. C'est à dire tant que l'adresse de la case mémoire où il écrit, est strictement inférieure 25 à l'adresse 63 de fin du fichier dynamique 6. Si l'adresse d'écriture se trouve être égale à celle 63 de fin, un programme de rejet s'exécute 26 car il n'y a pas la place dans la mémoire 4 de stocker le fichier 8. Une fois l'écriture terminée 27, le microprocesseur 10 pointe à l'adresse 63 de fin. L'émetteur écrit 28, à cette adresse 63, le descripteur 9. Le système d'exploitation se charge ensuite de vérifier la cohérence du descripteur 9. Puis, le microprocesseur 10 stocke 29, dans les registres pointeurs 12 et 13, les nouvelles adresses 62 et 63 de début et de fin du fichier dynamique 6.

Lors de la personnalisation de la carte 1, il est fréquent d'avoir à créer plusieurs fichiers 8. L'invention permet de les créer en exécutant une seule fois l'instruction 15 de sélection du fichier dynamique 6 alors que, dans l'état de la technique, on doit exécuter une instruction de création pour chaque fichier. Ce qui permet un gain de temps considérable lors de la phase de personnalisation. A cette fin, l'émetteur sélectionne le fichier dynamique 6. Il écrit, au début du fichier dynamique 6, les données des fichiers 8 qu'il veut créer. Puis, il écrit à la fin du fichier dynamique 6 les descripteurs 9 correspondant à ces fichiers 8 créés en respectant la taille 56 et l'emplacement 57 de chacun des fichiers 8. Comme on écrit plusieurs descripteurs 9, le test 25 permettant de savoir s'il reste de la place dans la zone vierge 6, se trouve modifié. L'émetteur peut écrire des données tant que l'adresse d'écriture est strictement inférieure à l'adresse 63 de fin - le nombre de fichiers 8 créés + un. C'est pourquoi, on prévoit que l'émetteur, en fonction du nombre de fichiers 8 qu'il crée, puisse modifier le test 25 (ceci n'a pas été représenté sur les figures).

Lors de la phase de personnalisation, l'émetteur peut aussi verrouiller un fichier 8 s'il considère qu'il contient des données secrètes et immuables. Dans l'invention, le verrouillage s'effectue, lors de la création du fichier, en écrivant des conditions 53, 54 et 55 interdisant l'accès en lecture, en modification et en effacement (ces conditions sont fixées à "INT"). Cette méthode de verrouillage permet un gain de temps lors de la phase de personnalisation. En effet, on n'utilise qu'une seule instruction, l'instruction 15 de sélection du fichier dynamique, alors que, dans l'état de la technique, on utilise une instruction de création de fichier et une instruction de verrouillage.

Dans le cas d'une extension de fichier, l'émetteur sélectionne le fichier dynamique 6, écrit les données du nouveau fichier. Puis, pour relier le nouveau fichier à un fichier à étendre, il duplique, dans le descripteur du nouveau fichier, le nom 51, le répertoire 52 et les conditions 53, 54 et 55 d'accès du fichier à étendre, les informations sur l'emplacement 56 et la taille 57 étant différentes. Ainsi, seul l'émetteur peut étendre un fichier 8. Car il est le seul à pouvoir sélectionner le fichier dynamique 6. C'est pourquoi, dans l'invention, à la différence de l'état de la technique, on n'a pas besoin de condition d'accès d'extension.

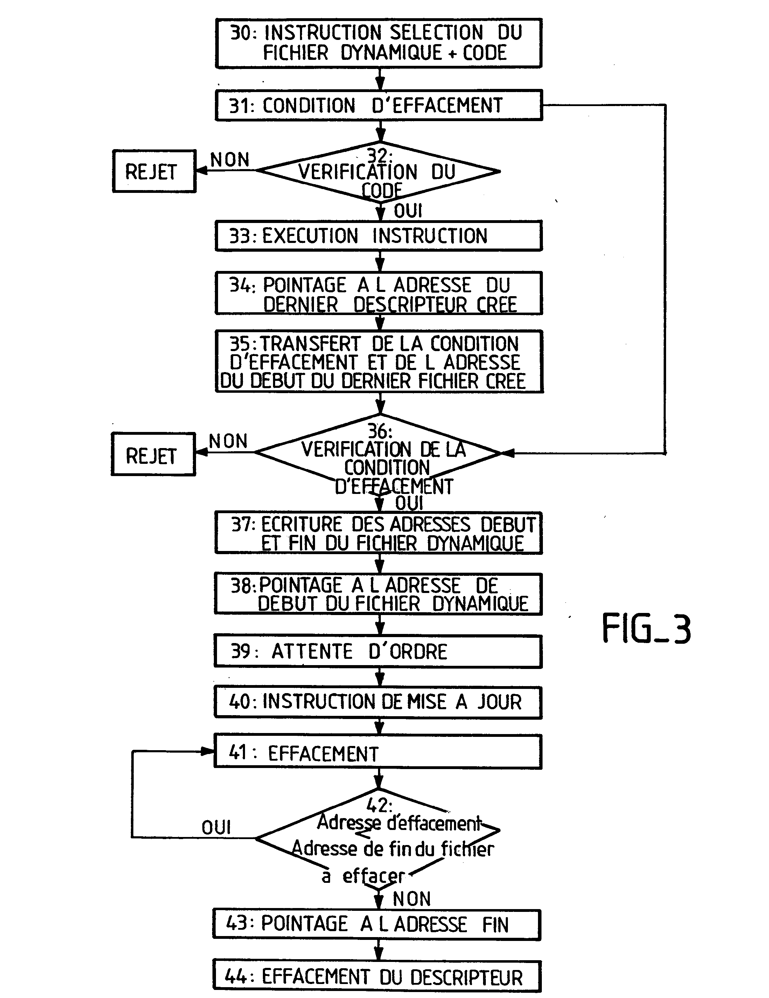

Pour effectuer l'effacement d'un fichier (figure 3), on sélectionne aussi le fichier dynamique 6. Mais, dans ce cas, ce fichier n'est plus limité à la zone vierge. Il contient, dans ce cas, le dernier fichier créé (fichier n°4 d'après la figure 1). C'est ce fichier (n°4) que l'on efface. Cette opération s'effectue aussi grâce à l'instruction 15 de sélection du fichier dynamique mais d'une façon légèrement différente. L'émetteur entre 30 et 31 l'ordre de sélection du fichier dynamique, un code d'accès à l'instruction et la condition d'accès en effacement du dernier fichier (n°4). En effet, pour effacer un fichier, il faut satisfaire à la condition 55 d'accès en effacement. Cette condition peut, par exemple, interdire l'effacement ou la permettre sous contrôle du code 61 administratif. C'est l'entrée 31 de cette condition qui permet au système d'exploitation de distinguer que l'émetteur veut sélectionner le fichierdynamique 6 non vierge. Toutd'abord, on vérifie 32 le code d'accès à l'instruction 15. En cas de succès, l'instruction 15 de sélection du fichier dynamique est exécutée 33. Puis, afin de déterminer les adresses 62 et 63 de début et de fin du fichier dynamique 6 non vierge (les adresses contenues dans les registres pointeurs 12 et 13 correspondent au fichier dynamique 6 vierge) le microprocesseur 10 pointe 34 le dernier descripteur 9 créé (descripteur du fichier n°4). Il lit 35 les informations sur la condition 55 d'accès en effacement et sur l'adresse 56 de début du dernier fichier créé (n°4). En cas de succès du test 36 de vérification, il enregistre 37, dans le registre pointeur 12, cette adresse en tant qu'adresse 62 de début du fichier dynamique 6. De même, l'adresse 63 de fin du fichier dynamique 6 est stockée 37 dans le registre pointeur 13. Elle est égale à l'adresse du dernier descripteur 9 créé. Le microprocesseur 10 pointe 38 alors au début du fichier dynamique 6 non vierge et donne 39 la main à l'émetteur. Celui-ci lance 40 l'instruction 16 de mise à jour. Puis, il efface 41 le dernier fichier créé (n°4). Pour éviter des trous de mémoire inutilisables, un test 42 est prévu afin qu'il efface tout le fichier (n°4) et non une partie. L'effacement 41 se produit tant que l'adresse de la case mémoire où l'émetteur efface, est strictement inférieure à l'adresse de la fin du fichier (n°4) à effacer. Une fois l'effacement des données terminé, le microprocesseur 10 pointe 43 à la fin du fichier dynamique 6 pour que l'émetteur efface 44 le descripteur 9 (correspondant au fichier n°4). Ainsi, à la fin de l'opération d'effacement, on retrouve un fichier dynamique 6 vierge dont les adresses 62 et 63 de début et de fin sont stockées dans les registres pointeurs 12 et 13.

L'opération décrite ci-dessus a permis l'effacement du dernier fichier créé. Si l'émetteur veut effectuer l'effacement d'un fichier 8 situé plus haut (par exemple le fichier n°2 de la figure 1) il copie, dans une autre mémoire (non représentée sur les figures), les fichiers 8 compris entre le fichier à effacer et le dernier fichier créé (soit les fichiers 3 et 4). Le fichier à effacer (n°2) se trouve être contiguë à la zone vierge du fichier dynamique 6. Il est alors possible de l'effacer.

De plus, l'opération d'effacement 41 d'un fichier 8 n'est permise qu'à condition de satisfaire à la condition 55 d'effacement. Cela suppose aussi que cette condition 55 soit différente de "INT". Elle aurait ainsi interdit, d'une part, l'effacement du fichier et, d'autre part, celui des fichiers situés plus haut dans la mémoire. On comprend alors qu'il faille respecter une méthodologie de création dès le début. Il faut créer au début tous les fichiers contenant des données immuables telles que des codes secrets. Ces fichiers doivent avoir une condition 55 d'effacement à "INT". On peut ensuite créer tous les fichiers susceptibles d'être effacés en leur donnant une condition 55 d'effacement administrative.

## Revendications

1- Procédé de personnalisation de la mémoire (4) d'une puce (2) d'une carte à puce (1), cette puce (2) étant munie d'un microprocesseur (10) et de cette mémoire (4), dans lequel
- on organise la mémoire (4) pour qu'elle présente une zone de données (5), une zone contenant une table d'allocation (7) et, située entre ces deux zones, une zone vierge (6) de mémoire inutilisée,
- on munit le microprocesseur (10) d'un jeu d'instructions (16 et 50) d'utilisation utilisables par un utilisateur, caractérisé en ce que
- on munit de plus le microprocesseur (10) d'une instruction (15) spécifique dite de sélection de cette zone vierge, appelée fichier dynamique (6),
- on repère (20) les adresses (62 et 63) du début et de la fin du fichier dynamique (6),
- on range ces adresses (62 et 63) de début et de fin dans deux registres pointeurs (12 et 13),
- on sélectionne (21 et 28) le fichier dynamique (6), cette opération de sélection consistant à limiter toutes opérations, notamment d'utilisation et de personnalisation de la mémoire (4) de la puce (2), aux cellules mémoires de la mémoire (4) dont les adresses sont comprises entre les adresses rangées (62 et 63),
- on effectue (24) sur ce fichier dynamique (6) des opérations de personnalisation en exécutant (23) des instructions (16) d'utilisation.

2- Procédé selon la revendication 1 caractérisé en ce que
- les adresses (62 et 63) du début et de la fin du fichier dynamique (6), stockées dans les registres pointeurs (12 et 13), sont lues (20) lors de la sélection du fichier dynamique (6) et sont modifiées (29) une fois l'opération de personnalisation terminée.

3- Procédé selon la revendication 1 caractérisé en ce que
- on calcule, à chaque sélection du fichier dynamique (6), les adresses (62 et 63) de début et de fin du fichier dynamique (6),
- on effectue ce calcul en pointant un descripteur créé en dernier et présent dans la table d'allocation (7),
- l'adresse (62) de début du fichier dynamique (6) est rendue égale à l'adresse (56) du dernier fichier, présent dans la zone de données (5) et correspondant à ce descripteur, plus la taille (57) de ce fichier,
- l'adresse (63) de fin du fichier dynamique (6) est rendue égale à l'adresse de ce descripteur moins un.

4- Procédé selon l'une quelconque des revendications 1 à 3 caractérisé en ce que
- on sélectionne (21 et 28) le fichier dynamique (6) afin de créer un nouveau fichier (8),
- on écrit (24) des données et un descripteur correspondant au nouveau fichiercréé (8), respectivement, dans la partie du fichier dynamique (6) contiguë à la zone de données (5) et dans celle contiguë à la table d'allocation (7),
- le fichier dynamique (6) est ensuite réorganisé (29) de sorte que les données et le descripteur ainsi écrits fassent partie, respectivement, de la zone de données (5) et de la table d'allocation (7) et de sorte que, lors de la prochaine sélection du fichier dynamique (6), on ne sélectionne que la partie nouvellement vierge de la mémoire.

5- Procédé selon la revendication 4, caractérisé en ce que
- on écrit (24) plusieurs fichiers (8) lors d'une seule sélection du fichier dynamique (6),
- les données et les descripteurs des fichiers (8) créés sont emboîtés les uns dans les autres dans le fichier dynamique (6),
- le fichier dynamique (6) est ensuite réorganisé (29) de la même façon que lors de la création d'un fichier.

6- Procédé selon l'une quelconque des revendications 1 à 5 caractérisé en ce que
- on écrit (24), dans le fichier dynamique (6) sélectionné, des données d'extension (a') d'un fichier (8) à étendre (A),
- on duplique dans un descripteur correspondant à un nouveau fichier (A) toutes les informations contenues dans le descripteur (9) du fichier à étendre (A), à l'exception de celles sur l'emplacement (56) et la taille (57).

7- Procédé selon l'une quelconque des revendications 1 à 6 dans lequel les descripteurs (9) possèdent autant de conditions (53, 54 et 55) d'accès qu'il y a d'actions possibles sur les fichiers (8), caractérisé en ce que
- lors de la sélection du fichier dynamique (6), on écrit (24) d'une part les données d'un nouveau fichier (8),
- et on verrouille d'autre part ce fichier (8) en écrivant, au cours de la même sélection du fichier dynamique, dans le descripteur (9) de ce fichier, des conditions d'accès relatives à sa lecture (53), et/ou sa mise à jour (54), et/ou son effacement (55).

8- Procédé selon l'une quelconque des revendications 1 à 7 caractérisé en ce que
- on sélectionne (38 et 43) le fichier dynamique (6), non plus limité à la zone vierge, mais comportant aussi les données et le descripteur du dernier fichier (8) créé,
- en satisfaisant (36) à une condition (55) d'accès contenue dans le descripteur (9) du dernier fichier (8) créé.
9- Procédé selon la revendication 8 caractérisé en ce que
- pour effacer le dernier fichier (8) créé, on satisfait (36) à une condition (55) d'accès en effacement contenue dans le descripteur (9) de ce dernier fichier créé,
- puis sélectionne (38 et 43) le fichier dynamique (6), alors non vierge,
- et on efface (41 et 44) le descripteur (9) et les données associés à ce dernier fichier créé. 10- Procédé selon la revendication 8 ou la revendication 9, caractérisé en ce que
- on sélectionne (38 et 43) le fichier dynamique (6), non plus limité à la zone vierge, mais comportant aussi les données et le descripteur du dernier fichier (8) créé,
- on copie ce dernier fichier créé, présent dans le fichier dynamique (6), dans une mémoire annexe,
- puis on efface (41 et 44) le descripteur (9) et les données associées à ce dernier fichier créé,
- puis on sélectionne (38 et 43) à nouveau le fichier dynamique (6), non plus limité à la zone vierge, mais comportant aussi les données et le descripteur du précédent fichier (8) créé,
- on modifie ou efface (41 et 44) le contenu du fichier dynamique (6) correspondant à ce précédent fichier (8) créé,
- puis on sélectionne (38 et 43) à nouveau le fichier dynamique (6),
- et on copie dans ce fichier dynamique le contenu de la mémoire annexe.

11- Procédé selon l'une quelconque des revendi- i-cations 1 à 10 caractérisé en ce que
- on ne peut exécuter (19 et 33) l'instruction (15) de sélection du fichier dynamique (6) que sur présentation d'un code (61) secret appartenant à un émetteur de la carte à puce (1).
